# EUROPÄISCHE PATENTANMELDUNG

(11) **EP 1 138 641 A1**
(43) Veröffentlichungstag der Anmeldung: **04.10.2001**
(21) Anmeldenummer: 01102953.5
(22) Anmeldetag: 08.02.2001
(51) Int. Cl.: C03C 4/08, C03C 3/087

(54) **Bleifreie bismuthaltige Silicatgläser und ihre Verwendungen**

(30) Priorität: 30.03.2000 DE 10015900; 16.06.2000 DE 10029818; 16.06.2000 DE 10029820
(71) Anmelder: Schott Glas, 55122 Mainz (DE); CARL-ZEISS-STIFTUNG trading as SCHOTT GLAS, 55122 Mainz (DE)
(72) Erfinder: Naumann, Karin, Dr., 55270 Ober-Olm (DE); Winkler-Trudewig, Magdalena, 55126 Mainz (DE); Wölfel, Ute, 55130 Mainz (DE); Kunert, Christian, 55118 Mainz (DE)

(57) **Zusammenfassung**

Die Erfindung betrifft bleifreie bismuthaltige Silicatgläser mit einer Zusammensetzung (in Gew.-% auf Oxidbasis) von:
SiO₂ 40 - 60, Bi₂O₃ 10 - 30, ZrO₂ 0 - 3, Al₂O₃ 0,5 - 5, MgO 0 - 6, CaO 0,5 - 6, SrO 1 - 15, BaO 0 - 15, Summe Erdalkalioxide 2 - 20, ZnO 0 - 2, Li₂O 0 - 10, Na₂O 1 - 10, K₂O 2 - 10, Cs₂O 0 - 3, Summe Alkalioxide 5 - 20, CeO₂ 0 - 8, WO₃ 0,5 - 5, MoO₃ 0 - 5, Sb₂O₃ 0 - 0,6
   und
SiO₂ 30 - 50, Bi₂O₃ 20 - 40, ZrO₂ 0 - 3, Al₂O₃ 0,5 - 5, MgO 0 - 4, CaO 0,5- 4, SrO 1 - 15, BaO 0 - 15, Summe Erdalkalioxide 2 - 20, ZnO 0 - 2, Li₂O 0 - 5, Na₂O 1 - 12, K₂O 2 - 15, Cs₂O 0 - 3, Summe Alkalioxide 5 - 20, CeO₂ 0 - 8, WO₃ 0,5 - 5, MoO₃ 0 - 5, Sb₂O₃ 0 - 0,6.

Die Gläser sind besonders geeignet für die Verwendung als Trichterglas bzw. Halsglas für Kathodenstrahlröhren sowie als Lotglas.

## Beschreibung

Die Erfindung betrifft bleifreie bismuthaltige Silicatgläser. Die Erfindung betrifft auch Verwendungen dieser Gläser.

Fernsehröhren, arbeitend nach dem Kathodenstrahlprinzip, bestehen aus den Glasteilen Bildschirm (Schirm), Trichter und Hals. Die genannten Glasteile umschließen einen evakuierten Raum.
Der Hals ist der Teil der Röhre, der eine oder mehrere Elektronenstrahlkanonen enthält. Der Schirm weist unter anderem eine oder mehrere lumineszente Substanzen auf. Der Trichter ist der konusförmige Teil der Röhre.

Die genannten drei Glasteile weisen, um den unterschiedlichen Anforderungen zu genügen, unterschiedliche physikalische Eigenschaften als Ergebnis unterschiedlicher Zusammensetzungen auf.

Trichterglas muß u. a. folgende Anforderungen erfüllen: Es muß eine hohe Röntgenabsorption, einen hohen elektrischen Widerstand und eine zufriedenstellende Schmelzbarkeit und Verarbeitbarkeit aufweisen. Verfärbungen als Ergebnis der Elektronenstrahlung sind, im Gegensatz zum Schirmglas, hier kein Problem. Da die Wandstärke des Trichters geringer ist als die des Schirms, muß der Röntgenabsorptionskoeffizient µ von Trichterglas höher sein. In üblichen Trichtergläsern besitzt µ bei 0,06 nm einen Wert von ≥ 60 cm⁻¹. Dieser hohe Wert wird üblicherweise durch hohe PbO-Konzentrationen im Glas erzielt.

Die Anforderungen an Halsglas sind sehr ähnlich wie die Anforderungen an Trichterglas. Da die Halswand noch dünner als die des Trichters ist, sollte der Röntgenabsorptionskoeffizient von Halsglas noch höher sein: In üblichen Halsgläsern beträgt er µ ≥ 90 cm⁻¹ (bei 0,06 nm). Auch hier handelt es sich bisher üblicherweise um sehr hoch bleihaltige Gläser.

Da in den letzten Jahren die Glaskomponente PbO in der Öffentlichkeit als umweltbelastend in der Diskussion ist, besteht auch bei den Herstellern von Kathodenstrahlröhren enthaltenden Geräten der Bedarf an PbO-freien Gläsern mit den geforderten physikalischen Eigenschaften.

Durch den einfachen Ersatz des Bleioxides durch einen oder mehrere Bestandteile, gelingt eine Reproduktion der durch PbO beeinflußten physikalischen und glastechnischen Eigenschaften in der Regel nicht. Stattdessen sind Neuentwicklungen der Glaszusammensetzungen nötig.

Der Patentliteratur sind bereits verschiedene Schriften zu entnehmen, in denen bleifreie Gläser für Kathodenstrahlröhren beschrieben werden. Jedoch zeigen diese Gläser die verschiedensten Nachteile:
JP 7-206468 A und JP 7-206471 A beschreiben Trichtergläser bzw. Halsgläser für Kathodenstrahlröhren, die hoch Bi₂O₃-haltig sind und PbO zumindest als fakultative Komponente enthalten.
JP 9-142873 A beschreibt Gläser für Kathodenstrahlröhren, die neben einem ähnlichen Bi₂O₃-Anteil CeO₂ enthalten, um durch Elektronenstrahlung hervorgerufene Verfärbungen des Glases zu verhindern.

Es ist nun Aufgabe der Erfindung, Gläser bereitzustellen, die die genannten Anforderungen erfüllen, die insbesondere die nötige Röntgenabsorption aufweisen. Es ist Aufgabe der Erfindung, Gläser bereitzustellen, die für die Verwendung als Trichterglas geeignet sind. Es ist Aufgabe der Erfindung, Gläser bereitzustellen, die für die Verwendung als Halsgläser geeignet sind. Weiter ist es Aufgabe der Erfindung, Gläser bereitzustellen, die die Anforderungen an Lotgläser erfüllen, d. h., die niedrig schmelzend sind, die gut benetzen, fließen und gasdicht verschließen.

Die Aufgabe wird durch die Gläser gemäß den unabhängigen Ansprüchen 1 und 2 erfüllt.

Ausgehend von den aus den genannten Schriften bekannten Zusammensetzungsbereichen bismuthaltiger Gläser wurde ein Glas enwickelt, das neben Bi₂O₃ WO₃ als stark röntgenabsobierende Komponente enthält.

Der Mindestgehalt an WO₃ beträgt 0,5 Gew.-%, um eine ausreichende Wirkung zu erzielen. Der Höchstgehalt beträgt 5 Gew.-%. Bei höheren Anteilen käme es, insbesondere bei hohen Bi₂O₃-Gehalten, zu kristallinen Ausscheidungen, womit auch die Fließfähigkeit des Glases verloren ginge.

Weitere röntgenabsorbierende Komponenten des Glases sind Bi₂O₃, in Anteilen zwischen 10 und 30 Gew.-%, bevorzugt 15 - 30 Gew.-%, und bei den hoch röntgenabsorbierenden Varianten zwischen 20 und 40 Gew.-% vorhanden, und SrO, in Anteilen zwischen 1 und 15 Gew.-% und bei den hoch röntgenabsorbierenden Varianten bevorzugt zwischen 1 und 10 Gew.-%. Höhere Gehalte an SrO würden zu Strontiumsilicatbildung führen, bei höheren Gehalten an Bi₂O₃ käme es zu metallischen Bismut-Ausscheidungen.

Dadurch daß der Hauptanteil der Röntgenabsorption von drei verschiedenen Elementen hervorgerufen wird, wird das Glas in seiner amorphen Struktur stabilisiert und zeigt eine hohe Kristallisationsfestigkeit und ist der Glasbildungsbereich vergrößert.

Der SiO₂-Anteil des Glases beträgt wenigstens 40 Gew.-% und höchstens 60 Gew.-%, bei den hoch röntgenabsorbierenden Varianten wenigstens 30 Gew.-% und höchstens 50 Gew.-%. Mit diesen Höchstgehalten ist eine gute Schmelz- und Preßbarkeit des Glases gewährleistet. SiO₂ dient primär als Netzwerkbildner; bei einem Gehalt unter dem Mindestgehalt ist die Glasbildung soweit herabgesetzt, daß keine Gläser mehr erhalten werden, und es wäre seine chemische Beständigkeit herabgesetzt.

Das Glas enthält 0,5 bis 5 Gew.-% Al₂O₃. Al₂O₃ verbessert die chemische Beständigkeit und die Kristallationsstabilität im angegebenen Zusammensetzungsbereich. Bei niedrigeren Gehalten sind die Effekte zu gering, bei höheren Gehalten steigt die Viskosität des Glases und der Erweichungspunkt zu sehr an, was die Schmelz- und Verarbeitbarkeit des Glases verschlechtert.

Die Alkalioxide Na₂O (1 - 10 Gew.-% bzw. bei den hoch röntgenabsorbierenden Varianten 1 - 12 Gew.-%, bevorzugt 1 - 10 Gew.-%) und K₂O (2 - 10 Gew.-% bzw. bei den hoch röntgenabsorbierenden Varianten 2 - 15 Gew.-%) dienen als Flußmittel und verringern die Viskosität des Glases. Unterhalb der genannten Untergrenzen ist die Viskositätserniedrigung unzureichend, während oberhalb der genannten Obergrenzen nicht nur die Viskosität, sondern auch der elektrische Widerstand zu sehr herabgesetzt wird. Weiter kann das Glas in den eher gering röntgenabsorbierenden Varianten (µ < 90 cm⁻¹ bei 0,06 nm) bis zu 10 Gew.-% Li₂O, bevorzugt bis zu 5 Gew.-%, und bei den höher röntgenabsorbierenden Varianten bis zu 5 Gew.-%, und bis zu 3 Gew.-% Cs₂O enthalten.

Die Summe der Alkalioxide beträgt zwischen 5 und 20 Gew.-%.

Neben dem Erdalkalioxid SrO enthält das Glas auch CaO, und zwar von 0,5 bis 4 Gew.-% und bei den geringer röntgenabsorbierenden Varianten bis zu 6 Gew.-%. Durch CaO wird die Schmelztemperatur herabgesetzt und der elektrische Widerstand erhöht. Bei höheren Anteilen steigt die Erweichungstemperatur zu sehr an, und der Viskositätsverlauf als Funktion der Temperatur ist zu steil, wodurch das Glas schwierig zu schmelzen wird. Weiter nimmt die Entglasungsneigung zu und wird die Fließfähigkeit eingeengt.

Gleiches gilt für MgO, das mit bis zu 4 Gew.-% und bei den geringer röntgenabsorbierenden Varianten mit bis zu 6 Gew.-% im Glas vorhanden sein kann und das bevorzugt mit wenigstens 0,5 Gew.-% vorhanden ist. Ein teilweiser Ersatz von CaO durch MgO erhöht die Entglasungsfestigkeit.

Das Glas kann auch bis zu 15 Gew.-% BaO, wie SrO als röntgenabsorbierende Komponente, enthalten. Bei den höher röntgenabsorbierenden Varianten sind bis zu 10 Gew.-% BaO bevorzugt. Höhere Gehalte würden die Liquidustemperatur und damit die Kristallistationsneigung erhöhen.

Die Summe der Erkalkalioxide soll zwischen 2 und 20 Gew.-% betragen. Bei den eher gering röntgenabsorbierenden Varianten sind 2 bis 15 Gew.-% bevorzugt.

Das Glas kann auch übliche Läutermittel in üblichen Mengen enthalten. Insbesondere kann das Glas bis zu 0,6 Gew.-% Sb₂O₃ enthalten.

Das Glas kann bis zu 3 Gew.-% ZrO₂ enthalten. Bevorzugt ist es ZrO₂-frei. Das Glas kann bis zu 2 Gew.-% ZnO enthalten. Bevorzugt ist es ZnO-frei.

Das Glas kann weiterhin bis zu 5 Gew.-% MoO₃ und bis zu 8 Gew.-% CeO₂ enthalten. Diese Komponenten wirken nicht nur als Läutermittel, sondern erleichtern auch die Glasbildung und erhöhen die Röntgenabsorption. Daher ist es bevorzugt, daß diese Komponenten in Glas vorhanden sind. Vorzugsweise enthält das Glas wenigstens 0,2 Gew.-% MoO₃, vorzugsweise enthält es wenigstens 0,5 Gew.-% CeO₂.

### Ausführungsbeispiele:

Aus herkömmlichen Rohstoffen wurden bei 1200 bis 1400°C dreiundzwanzig erfindungsgemäße Gläser in Keramiktiegeln im Gasofen unter oxidierenden Bedingungen erschmolzen. Die Schmelzen wurden eine Stunde bei 1300 bis 1400°C geläutert und anschließend als Block gegossen.

Die Tabellen 1 und 2 zeigen die Zusammensetzungen dieser Gläser (in Gew.-% auf Oxidbasis) und ihre wichtigsten Eigenschaften. Angegeben sind:
- der thermische Ausdehnungskoeffizient α_{20/300} [10⁻⁶/K]
- die Transformationstemperatur Tg [°c]
- die Dichte p [g/cm³]
- der Röntgenabsorptionskoeffizient µ [cm⁻¹ ] bei 0,06 nm

Dabei enthält Tabelle 1 die Gläser mit eher geringen Röntgenabsorptionskoeffizienten, während Tabelle 2 die Gläser mit hohen Röntgenabsorptionskoeffizienten, das heißt mit µ (bei 0,06 nm) ≥ 90 cm⁻¹, präsentiert.

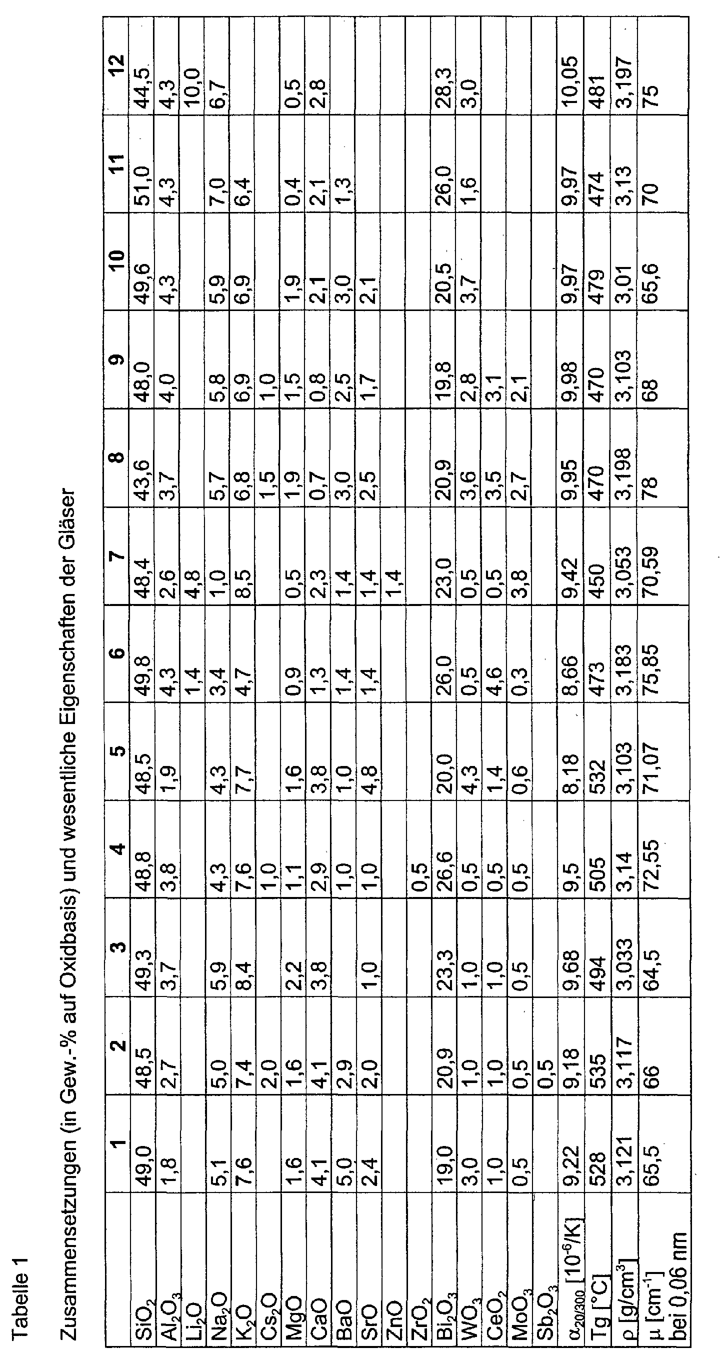

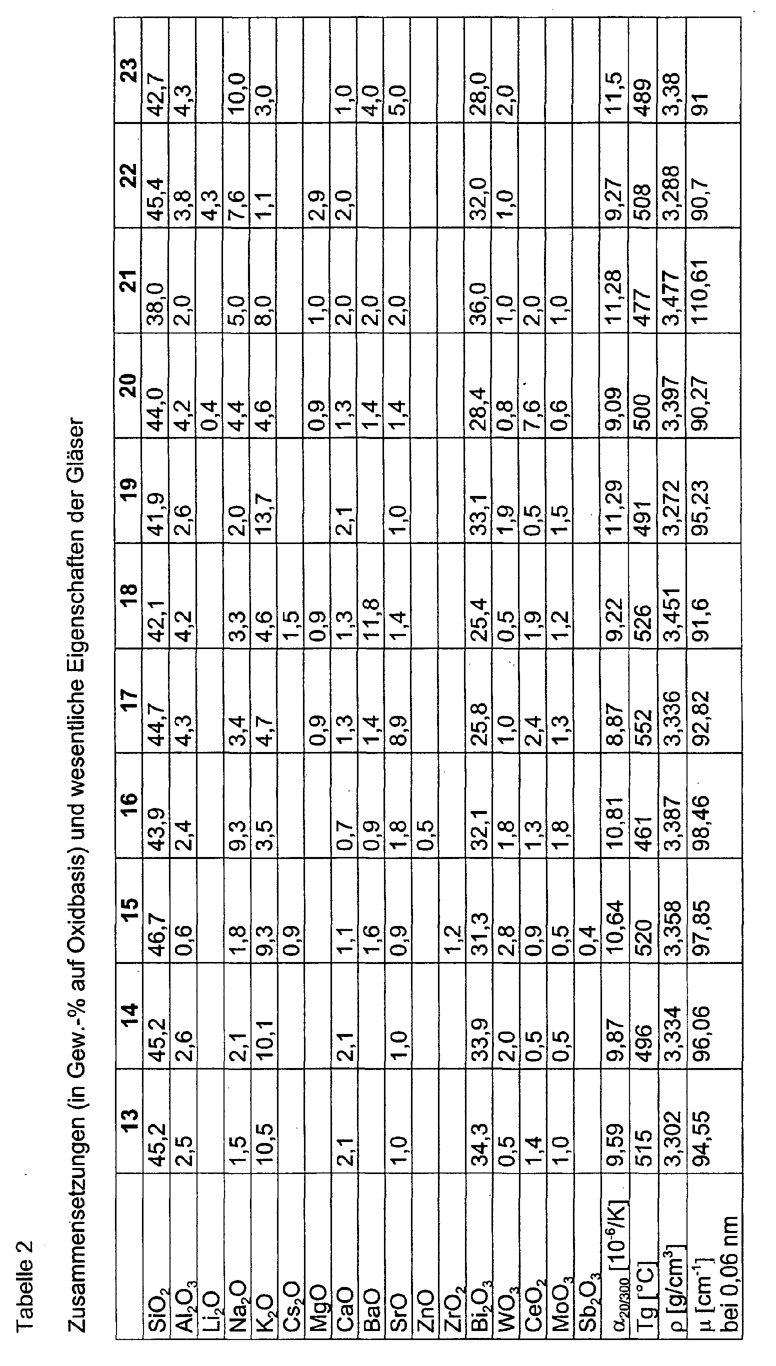

Die erfindungsgemäßen Gläser besitzen folgende vorteilhafte Eigenschaften:
- Aufgrund ihrer thermischen Ausdehnungskoeffizienten sind die Gläser geeignet für eine spannungsfreie Verschmelzung bzw. Verlötung mit Hals- und Schirmgläsern bzw. mit Trichtergläsern.
- Sie sind gut schmelz- und verarbeitbar.
- Sie sind ausreichend kristallisationsstabil.
- Sie weisen ausreichende chemische Beständigkeiten. auf.
- Sie weisen einen ausreichend hohen elektrischen Widerstand auf.

Insbesondere aufgrund der niedrigen Transformationstemperatur und der guten Fließfähigkeit sind die Gläser sehr gut für die Verwendung als Lotglas geeignet. Unter Lotglas soll hierbei sowohl das als Lot einsetzbare Glas als auch das Glas, das als Lotgrundglas zusammen mit keramischen Zuschlägen das Compositlot bildet, verstanden werden.
- Sie weisen mit einem Röntgenabsorptionskoeffizient µ von mehr als 60 cm⁻¹ bei 0,06 nm eine hohe Röntgenabsorption auf.

Mit dieser und den genannten Eigenschaften sind die Gläser hervorragend geeignet für die Verwendung als Trichterglas für Kathodenstrahlröhren.
- Die Bi₂O₃-reichen und SiO₂-ärmeren Gläser weisen mit einem Röntgenabsorptionskoeffizienten von ≥ 90 cm⁻¹ bei 0,06 nm, vorzugsweise sogar von mehr als 95 cm⁻¹, eine besonders hohe Röntgenabsorption

Mit dieser und den genannten anderen Eigenschaften sind die Gläser besonders geeignet für die Verwendung als Halsglas für Kathodenstrahlröhren.

## Patentansprüche

1. Bleifreies bismuthaltiges Silicatglas mit einer Zusammensetzung (in Gew.-% auf Oxidbasis) von
| | |
|---|---|
| SiO₂ | 40 - 60 |
| Bi₂O₃ | 10 - 30 |
| ZrO₂ | 0 - 3 |
| Al₂O₃ | 0,5 - 5 |
| MgO | 0 - 6 |
| CaO | 0,5 - 6 |
| SrO | 1 - 15 |
| BaO | 0 - 15 |
| Summe Erdalkalioxide | 2 - 20 |
| ZnO | 0 - 2 |
| Li₂O | 0 - 10 |
| Na₂O | 1 - 10 |
| K₂O | 2 - 10 |
| Cs₂O | 0 - 3 |
| Summe Alkalioxide | 5 - 20 |
| CeO₂ | 0 - 8 |
| WO₃ | 0,5 - 5 |
| MoO₃ | 0 - 5 |
| Sb₂O₃ | 0 - 0,6 |

2. Bleifreies bismuthaltiges Silicatglas mit einer Zusammensetzung (in Gew.-% auf Oxidbasis) von
| | |
|---|---|
| SiO₂ | 30 - 50 |
| Bi₂O₃ | 20 - 40 |
| ZrO₂ | 0 - 3 |
| Al₂O₃ | 0,5 - 5 |
| MgO | 0 - 4 |
| CaO | 0,5 - 4 |
| SrO | 1 - 15 |
| BaO | 0 - 15 |
| Summe Erdalkalioxide | 2 - 20 |
| ZnO | 0 - 2 |
| Li₂O | 0 - 5 |
| Na₂O | 1 - 12 |
| K₂O | 2 - 15 |
| Cs₂O | 0 - 3 |
| Summe Alkalioxide | 5 - 20 |
| CeO₂ | 0 - 8 |
| WO₃ | 0,5 - 5 |
| MoO₃ | 0 - 5 |
| Sb₂O₃ | 0 - 0,6 |

3. Silicatglas nach Anspruch1 oder 2,
**dadurch gekennzeichnet,**
**daß** es wenigstens 0,2 Gew.-% MoO₃ enthält.

4. Silicatglas nach wenigstens einem der Ansprüche 1 bis 3,
**dadurch gekennzeichnet,**
**daß** es wenigstens 0,5 Gew.-% CeO₂ enthält.

5. Silicatglas nach wenigstens einem der Ansprüche 1, 3 und 4,
**gekennzeichnet durch** eine Zusammensetzung (in Gew.-% auf Oxidbasis) von :
| | |
|---|---|
| SiO₂ | 40 - 60 |
| Bi₂O₃ | 15 - 30 |
| Al₂O₃ | 0,5 - 5 |
| MgO | 0,5 - 6 |
| CaO | 0,5 - 6 |
| SrO | 1 - 15 |
| BaO | 1 - 15 |
| Summe Erdalkalioxide | 2 - 15 |
| Li₂O | 0 - 5 |
| Na₂O | 1 - 10 |
| K₂O | 2 - 10 |
| Cs₂O | 0 - 3 |
| Summe Alkalioxide | 5 - 20 |
| CeO₂ | 0,5 - 8 |
| WO₃ | 0,5 - 5 |
| MoO₃ | 0,2 - 5 |
| Sb₂O₃ | 0 - 0,6 |

6. Silicatglas nach wenigstens einem der Ansprüche 2 bis 4,
**gekennzeichnet durch** eine Zusammensetzung (in Gew.-% auf Oxidbasis) von :
| | |
|---|---|
| SiO₂ | 30 - 50 |
| Bi₂O₃ | 20 - 40 |
| Al₂O₃ | 0,5 - 5 |
| MgO | 0,5 - 4 |
| CaO | 0,5 - 4 |
| SrO | 1 - 10 |
| BaO | 0 - 12 |
| Summe Erdalkalioxide | 2 - 20 |
| Li₂O | 0 - 5 |
| Na₂O | 1 - 10 |
| K₂O | 2 - 15 |
| Cs₂O | 0 - 3 |
| Summe Alkalioxide | 5 - 20 |
| CeO₂ | 0,5 - 8 |
| WO₃ | 0,5 - 5 |
| MoO₃ | 0,2 - 5 |
| Sb₂O₃ | 0 - 0,6 |

7. Silicatglas nach wenigstens einem der Ansprüche 1 und 3 bis 5 mit einem Röntgenabsorptionskoeffizienten µ bei 0,06 nm von mehr als 60 cm⁻¹.

8. Verwendung eines Silicatglases nach Anspruch 7 als Trichterglas für Kathodenstrahlröhren.

9. Silicatglas nach wenigstens einem der Ansprüche 2 bis 4 und 6 mit einem Röntgenabsorptionskoeffizienten µ bei 0,06 nm von wenigstens 90 cm⁻¹.

10. Verwendung eines Silicatglases nach Anspruch 9 als Halsglas für Kathodenstrahlröhren.

11. Verwendung eines Silicatglases nach wenigstens einem der Ansprüche 1 bis 6 als Lotglas.
